# FASCICULE DE BREVET EUROPEEN

(11) **EP 1 964 203 B1**
(45) Date de publication et mention de la délivrance du brevet: **27.07.2011**
(21) Numéro de dépôt: 06841849.0
(22) Date de dépôt: 04.12.2006
(51) Int. Cl.: H01M 8/10, H01M 8/02

(54) **PROCÉDÉ DE FABRICATION D'UNE PILE À COMBUSTIBLE AVEC COLLECTEURS DE COURANT INTEGRÉS À L'ÉLECTROLYTE SOLIDE**
VERFAHREN ZUR HERSTELLUNG EINER BRENNSTOFFZELLE MIT IM FESTELEKTROLYT INTEGRIERTEN STROMKOLLEKTOREN
PROCESS FOR MANUFACTURING A FUEL CELL WITH CURRENT COLLECTORS INTEGRATED WITH THE SOLID ELECTROLYTE

(30) Priorité: 09.12.2005 FR 0512528
(43) Date de publication de la demande: 03.09.2008
(73) Titulaire: Commissariat à l'Énergie Atomique et aux Énergies Alternatives, 75015 Paris (FR)
(72) Inventeur: LAURENT, Jean-Yves, F-38420 Domene (FR); CAPRON, Philippe, F-38200 Luzinay (FR); MARTINENT, Audrey, F-38000 Grenoble (FR); LOCATELLI, Denis, F-38430 Moirans (FR)
(74) Mandataire: Hecké, Gérard
(86) Numéro de dépôt international: PCT/FR2006/002640
(87) Numéro de publication internationale: WO 2007/068810

(56) Documents cités:
- EP-A- 1 291 944
- EP-A- 1 429 408
- EP-A- 1 434 297
- FR-A- 2 857 162
- US-A1- 2005 250 004

## Description

### Domaine technique de l'invention

L'invention concerne une pile à combustible et plus particulièrement une micropile à combustible comprenant au moins :
- deux collecteurs de courant, respectivement anodique et cathodique et comportant chacun au moins un passage transversal traversant ledit collecteur de courant correspondant, d'une première surface à une seconde surface,
- un élément séparateur isolant électriquement disposé entre les collecteurs de courant anodique et cathodique et comprenant des première et seconde faces opposées, respectivement en contact avec les premières surfaces des collecteurs de courant anodique et cathodique, et une pluralité de canaux transversaux, le traversant de la première face à la seconde face,
- un électrolyte solide conducteur ionique, en contact avec les deux collecteurs de courant et occupant le volume délimité par les canaux de l'élément séparateur et par les passages des collecteurs de courant.

L'invention concerne également un procédé de fabrication d'une telle pile à combustible.

### État de la technique

Pour réduire la taille des piles à combustible à électrolyte solide, conducteur ionique tout en conservant l'efficacité des collecteurs de courant, il a été proposé de former les collecteurs de courant directement sur les faces d'une membrane électrolytique.

Le document EP-A-1562243 propose, par exemple, un procédé permettant de transférer les collecteurs de courant sur une membrane électrolytique. Ainsi, un collecteur de courant est réalisé par dépôt de métal galvanique dans un moulue doté d'ouvertures traversantes de sorte que le dépôt déborde des ouvertures par un bourrelet. Puis, il est transféré sur une membrane électrolytique collée à une plaque de support. Le transfert est, alors, réalisé en pressant l'un contre l'autre l'ensemble contenant le collecteur et l'ensemble contenant la membrane. La pression exercée permet d'incruster au moins une partie du bourrelet du collecteur dans la membrane. Puis, les deux ensembles sont ensuite éloignés pour que le collecteur de courant se détache de son ensemble et reste fixé à la membrane. La plaque support est alors séparée de la membrane. Dans une variante, le transfert peut également être réalisé à appliquant une colle à prise différée sur le bourrelet du collecteur, avant d'assembler les deux ensembles contenant respectivement le collecteur et la membrane et en faisant prendre la colle avant d'éloigner les deux ensembles.

Un tel procédé de réalisation s'avère être complexe et- peu pratique à mettre en oeuvre. Il nécessite de réaliser séparément la membrane et les collecteurs de courant, avant qu'ils ne soient assemblés ensemble et les deux collecteurs de courant sont transférés successivement sur la membrane. De plus, avec une membrane de faible épaisseur, un court-circuit peut se produire lors de la mise en place des électrodes sur l'ensemble comprenant les collecteurs de courant et ladite membrane.

Pour réduire la taille des piles à combustible, la demande de brevet US-2005/0250004 propose une membrane échangeuse d'ions comportant, en plus du matériau conducteur ionique, un élément non conducteur formé par un substrat. Le substrat est muni d'une ou plusieurs ouvertures le traversant et le matériau conducteur ionique remplit lesdites ouvertures. Deux collecteurs de courant peuvent être respectivement disposés sur les deux faces opposées du substrat. Les collecteurs de courant comportent chacun un passage transversal qui peut également être rempli de matériau conducteur ionique. Un tel substrat apporte une certaine résistance mécanique à la membrane échangeuse d'ions, ce qui permet de réduire son épaisseur par rapport aux membranes usuelles. Il est, par exemple, formé par un circuit imprimé, un film en polymère tel qu'en polyamide, polyimide, polyéthylène ou Téflon®, par un matériau composite renforcé par exemple par des fibres de verre. Dans d'autres applications, le substrat peut être en matériau flexible.

L'utilisation d'un tel substrat n'est, cependant, pas toujours satisfaisante pour rendre certaines piles à combustible fiables, notamment dans le cas des piles fabriquées en réalisant préalablement les collecteurs de courant, par exemple sous forme de grille ou de peigne, et en assemblant les collecteurs de courant sur ladite membrane électrolytique solide.

### Objet de l'invention

L'invention a pour but une pile à combustible et son procédé de fabrication remédiant aux inconvénients de l'art antérieur.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent respectivement en vue de dessus et en coupe agrandie selon A-A un collecteur de courant sous forme d'une grille.
La figure 3 illustre en vue de dessus un collecteur de courant sous forme d'un peigne.
La figure 4 représente en coupe un élément séparateur sous forme d'une grille.

Les figures 5 à 9 représentent, en coupe, différentes étapes d'un mode particulier de réalisation d'une pile à combustible selon l'invention, comprenant deux collecteurs de courant selon la figure 1 et un élément séparateur selon la figure 4.

### Description de modes particuliers de réalisation

Une pile à combustible et plus particulièrement une micropile à combustible comprend au moins deux collecteurs de courant, respectivement anodique et cathodique, intégrés à un électrolyte solide. L'intégration des collecteurs de courant à l'électrolyte solide est facilitée par la présence d'un élément séparateur isolant électriquement et de cales d'épaisseur.

Les collecteurs de courant comportent chacun des première et des seconde surfaces, de préférence opposées. Chaque collecteur comporte également au moins un passage transversal et préférentiellement une pluralité de passages transversaux, traversant ledit collecteur de courant de la première surface à la seconde surface. Ainsi, au moins un des collecteurs de courant peut être sous forme d'une grille, d'un peigne, d'une couche mince en matériau tissé ou en matériau poreux. Souvent, les deux collecteurs de courant ont la même forme. Ils peuvent être en métal, par exemple en or ou en nickel, en graphite ou en un matériau polymère conducteur électriquement.

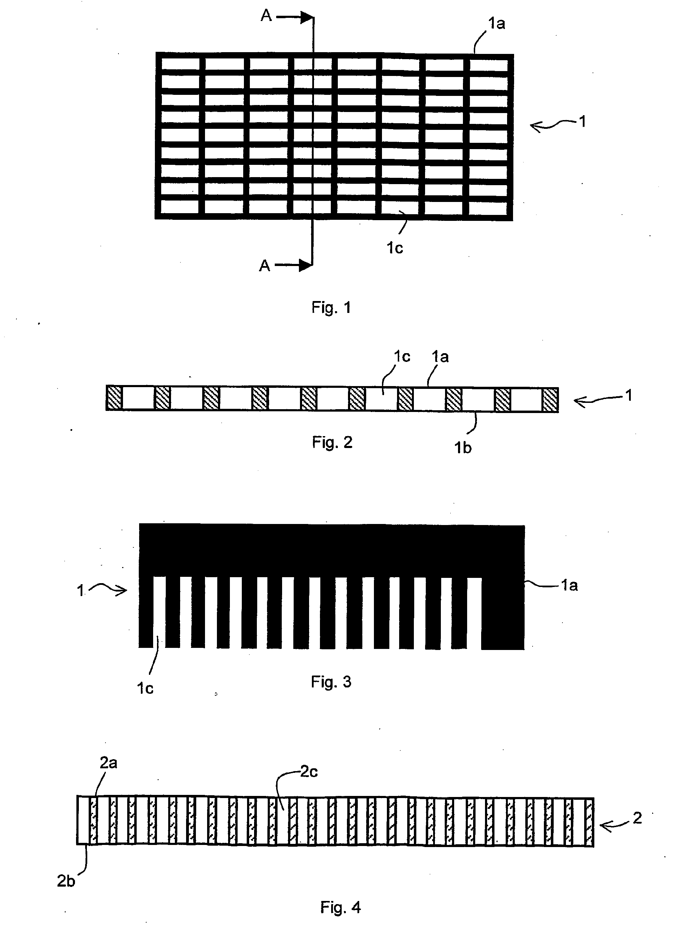

À titre d'exemple, les figures 1 et 2 représentent un collecteur de courant 1 sous la forme d'une grille et, sur la figure 3, le collecteur de courant est sous la forme d'un peigne. Le collecteur de courant 1, sous forme de grille ou de peigne, comporte donc des première et seconde surfaces opposées 1a et 1b ainsi que des passages transversaux 1c le traversant de la première surface 1a à la seconde surface 1b. Sur la figure 1, le collecteur de courant 1 comporte, par exemple, 72 passages transversaux.

L'élément séparateur comprend des première et seconde faces opposées, respectivement destinées à venir en contact avec les premières surfaces des collecteurs de courant anodique et cathodique. Il comporte une pluralité de canaux transversaux, le traversant de la première face à la seconde face. L'élément séparateur peut, par exemple, être sous la forme d'un film perforé, d'une grille, d'une couche mince en matériau tissé ou en matériau poreux. De plus, l'élément séparateur est formé par un matériau polymère thermoplastique et, préférentiellement par une résine fluorocarbonée. Parmi les résines fluorocarbonées, on peut citer les résines choisies parmi un copolymère modifié d'éthylène et de tétrafluoroéthylène (ETFE), le polyfluorure de vinylidène (PVDF), un copolymère de polyfluorure de vinylidène (PVDF) et d'hexafluorure de propylène.

À titre d'exemple, la figure 4 représente, en coupe, un élément séparateur 2 apte à être utilisé dans une telle pile à combustible. Il est sous forme d'une grille, avec des première et seconde faces opposées 2a et 2b et une pluralité de canaux transversaux 2c le traversant de la première face 2a à la seconde face 2b.

Des particules dures, isolantes électriquement, sont destinées à être disposées dans certains passages transversaux dudit élément séparateur, de manière à former, après assemblage, des cales d'épaisseur. Les particules dures sont, par exemple, choisies parmi les particules céramiques, en verre ou en polymère.

L'électrolyte solide est formé par un matériau conducteur ionique, c'est-à-dire conducteur anionique ou cationique et il occupe, dans la pile à combustible, le volume délimité par les canaux de l'élément séparateur et par les passages des collecteurs de courant. Le matériau formant l'électrolyte solide est, par exemple, un polymère perfluoré tel que le nafion®.

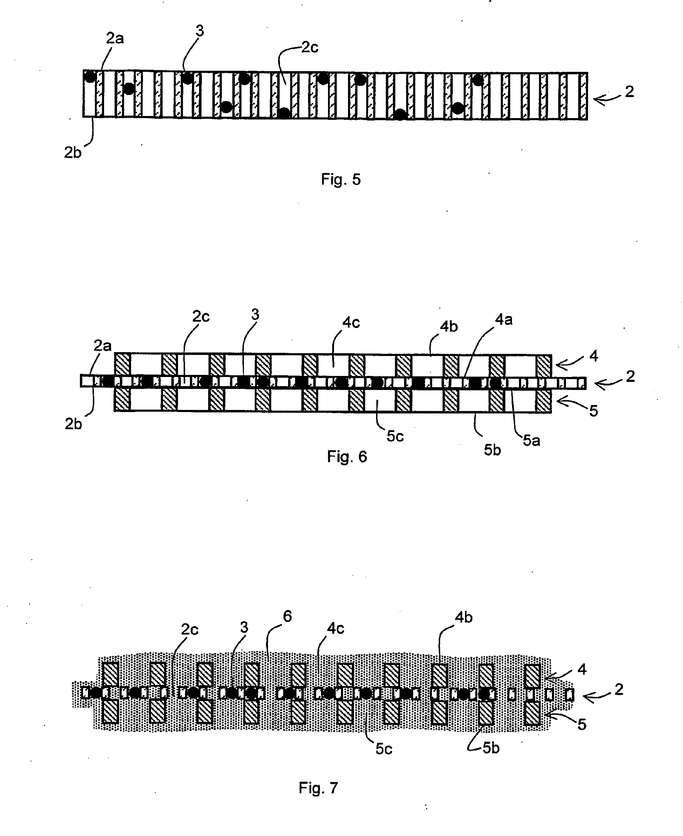

Les figures 5 à 9 illustrent les différentes étapes d'un mode particulier de réalisation d'une micropile à combustible.

Ainsi, comme représenté schématiquement sur la figure 5, des particules dures 3 sont introduites dans certains canaux transversaux 2c de l'élément séparateur 2 représenté sur la figure 4. Puis, deux collecteurs de courant 4 et 5, respectivement sous forme d'une grille métallique en or ou en nickel, telle que celle représentée sur les figures et 2, sont assemblés sur l'élément séparateur 2. Les collecteurs de courant 4 et 5 sont respectivement cathodique et anodique et l'élément séparateur 2 est, par exemple, sous forme d'une grille en ETFE. Ainsi, chacun des collecteurs de courant 4 ou 5 comporte une première surface 4a ou 5a et une seconde surface 4b ou 5b, avec des passages transversaux 4c ou 5c traversant le collecteur de la première surface 4a ou 5a à la seconde surface 4b ou 5b. Sur la figure 6, la première face 2a de l'élément séparateur 2 est en contact avec la première surface 4a du collecteur de courant cathodique 4 tandis que la seconde face 2b de l'élément séparateur 2 est en contact avec la première surface 5a du collecteur de courant anodique 5. L'assemblage des deux collecteurs de courant 4 et 5 sur l'élément séparateur 2 peut être réalisé par pressage et plus particulièrement par laminage à chaud des deux grilles formant les collecteurs de courant 4 et 5 sur la grille formant l'élément séparateur 2.

Comme représenté sur la figure 6, l'élément séparateur 2 est déformé au cours du pressage, ce qui permet l'incrustation et la fixation des collecteurs de courant 4 et 5 dans l'élément séparateur 2. La présence des particules dures 3 dans certains canaux transversaux 2c de l'élément séparateur 2 permet d'éviter un écrasement trop important de l'élément séparateur 2. Ainsi, l'épaisseur de l'élément séparateur 2, après l'étape d'assemblage, correspond, de préférence, à la dimension des particules dures 3 et plus particulièrement à leur diamètre si celles-ci sont sphériques.

Puis, comme illustré sur la figure 7, l'étape d'assemblage est suivie d'une étape de remplissage des canaux 2c et des passages 4c et 5c par l'électrolyte solide 6. Afin qu'une majorité de canaux transversaux 2c soit remplie d'électrolyte solide 6, les collecteurs de courant 4 et 5 sont, de préférence, formés et/ou disposés de manière à laisser libre au moins partiellement une ouverture de chaque canal transversal 2c. Ainsi, la largeur des canaux transversaux 2c de l'élément séparateur est, par exemple, choisie très inférieure aux largeurs respectives des passages transversaux 4c et 5c des collecteurs de courant 4 et 5. Lorsque les collecteurs de courant 4 et 5 sont de forme identique, par exemple sous forme de deux grilles métalliques identiques, l'assemblage des deux collecteurs de courant 4 et 5 peut être réalisé de manière à décaler les passages transversaux d'un collecteur de courant par rapport à ceux de l'autre collecteur de courant.

L'étape de remplissage peut être réalisée en imprégnant la structure représentée sur la figure 7, c'est-à-dire la structure formée par l'élément séparateur 2, les particules dures 3 et les deux collecteurs de courant 4 et 5, par un matériau précurseur de l'électrolyte solide. Le matériau précurseur est, de préférence, sous forme liquide ou pâteuse et occupe, de préférence, l'ensemble du volume délimité par les canaux 2c de l'élément séparateur 2 et les passages 4c et 5c des collecteurs de courant 4 et 5. Le matériau précurseur est ensuite réticulé de manière à obtenir l'électrolyte solide 6.

L'étape de remplissage peut également être réalisée par immersion de la structure représentée sur la figure 7 dans une solution contenant au moins un solvant et l'électrolyte et par évaporation dudit solvant. Ainsi, dans le cas d'un électrolyte conducteur protonique, la structure représentée sur la figure 7 peut, par exemple, être immergée dans une solution contenant 20% de Nafion®. Un séchage par évaporation du ou des solvants permet alors d'obtenir l'électrolyte sous forme solide.

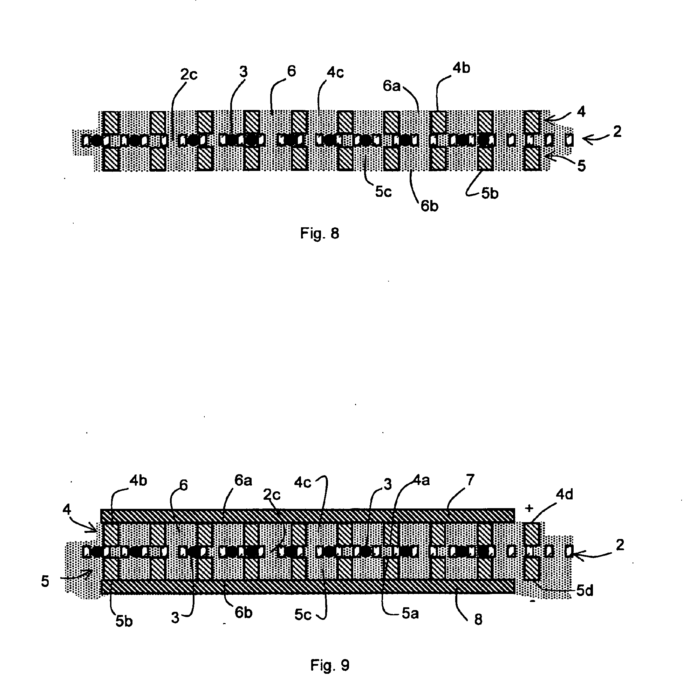

Dans ce cas et comme représenté sur la figure 7, l'électrolyte solide 6 enveloppe l'ensemble de la structure. Ainsi, l'électrolyte solide 6 recouvre plus particulièrement les secondes surfaces 4b et 5b des collecteurs de courant 4 et 5. Comme représenté sur la figure 8, une étape de planarisation peut alors être réalisée pour dégager les secondes surfaces 4b et 5b des collecteurs de courant 4 et 5. Elle est, par exemple, réalisée en fixant la structure sur un support et en effectuant un polissage mécanique des deux secondes surfaces 4b et 5b. Cette étape de planarisation permet de dégager les secondes surfaces 4b et 5b et de mettre les surfaces libres 6a et 6b de l'électrolyte solide 6 contenu respectivement dans les passages transversaux 4c et 5c au même niveau que les secondes surfaces 4b et 5b.

Comme représentées sur la figure 9, une cathode 7 et une anode 8, de préférence poreuses, peuvent être disposées respectivement sur la seconde surface 4b du collecteur de courant cathodique 4 et sur la seconde surface 5b du collecteur de courant anodique 5. Chaque électrode 7 ou 8 est alors non seulement en contact avec les secondes surfaces 4b et 5b des collecteurs de courant 4 et 5 mais également avec les surfaces 6a et 6b de l'électrolyte solide 6. Chaque électrode 7 ou 8 est, par exemple, assemblée sur la seconde surface du collecteur de courant correspondant par pulvérisation d'une encre de carbone chargée de catalyseur tel que du platine. De plus, cette étape d'assemblage peut être réalisée de manière à ce que chaque collecteur de courant 4 ou 5 comporte, sur sa seconde surface 4b ou 5b, une zone latérale 4d ou 5d non recouverte par l'électrode correspondante 7 ou 8. Les zones latérales 4d et 5d sont alors destinées à servir de connexion électrique ou de reprise de contact. L'ensemble peut ensuite être placé dans un boîtier comportant un compartiment pour l'alimentation de l'anode et un compartiment pour l'alimentation de la cathode.

La présence de l'élément séparateur dans la pile à combustible permet d'isoler électriquement les collecteurs de courant tout en assurant un maintien mécanique de l'électrolyte. L'épaisseur de l'élément séparateur est de préférence comprise entre 10µm et 200µm. Cette faible épaisseur permet, notamment, de diminuer les résistances ohmiques lors du fonctionnement de la pile et donc d'améliorer les performances de la pile à combustible. De plus, le fait que l'électrolyte solide soit disposé dans les canaux de l'élément séparateur et dans les passages des collecteurs de courant permet d'intégrer les collecteurs de courant à l'électrolyte solide et d'obtenir une membrane électrolytique autosupportée, c'est-à-dire ne nécessitant pas de support externe.

Le fait que l'élément séparateur soit en matériau polymère thermoplastique rend ledit élément séparateur flexible ce qui assure une bonne adhésion des collecteurs de courant lors de leur assemblage. Enfin, la présence de cales d'épaisseur, formées par les particules dures et disposées dans des canaux transversaux de l'élément séparateur permettent de limiter l'écrasement de l'élément séparateur en matériau polymère thermoplastique lors de l'assemblage des collecteurs de courant sur l'élément séparateur.

Une telle pile à combustible présente l'avantage d'être simple et rapide à réaliser. La présence de l'élément séparateur permet de maîtriser l'isolation électrique des collecteurs de courant. Par ailleurs, la pile à combustible présente une architecture capable de s'adapter à tout type de taille et la zone de contact entre les électrodes et les collecteurs de courant reste élevée. Ainsi, les performances de la pile à combustible sont élevées, elle reste fiable et son encombrement peut être réduit. En effet, l'électrolyte solide n'a pas besoin d'être supporté par un support externe imposant et il peut être de très faible épaisseur. Par ailleurs, le procédé de fabrication est très simple et rapide à mettre en oeuvre.

## Revendications

1. Procédé de fabrication d'une pile à combustible **caractérisé en ce qu'**il comporte successivement les étapes suivantes :
- introduction de cales d'épaisseurs formées par des particules dures (3), isolantes électriquement dans des canaux transversaux d'un élément séparateur (2) isolant électriquement et formé par un matériau polymère thermoplastique, lesdits canaux transversaux traversant l'élément séparateur d'une première face (2a) dudit élément séparateur à une seconde face opposée (2b) dudit élément séparateur,
- assemblage par pressage de deux collecteurs de courant, respectivement anodique (5) et cathodique (4) et comportant chacun au moins un passage transversal (4c, 5c) traversant ledit collecteur de courant correspondant, d'une première surface (4a, 5a) à une seconde surface (4b, 5b), avec application des premières surfaces (4a) des deux collecteurs de courant respectivement sur les première et seconde faces (2a, 2b) de l'élément séparateur (2) et déformation de l'élément séparateur (2) pendant le pressage, de manière à incruster et à fixer les collecteurs de courant (4, 5) dans ledit élément séparateur (2),
- et remplissage des canaux (2c) et des passages (4c, 5c) par un électrolyte solide (6) conducteur ionique, afin que ledit électrolyte solide (6) occupe le volume délimité par les canaux (2c) de l'élément séparateur (2) et par les passages (4c, 5c) des collecteurs de courant (4, 5) et soit en contact avec les deux collecteurs de courant (4, 5).

2. Procédé selon la revendication 1, **caractérisé en ce que** l'étape d'assemblage des collecteurs de courant (4, 5) sur les première et seconde faces (2a, 2b) de l'élément séparateur (2) est réalisée par laminage à chaud.

3. Procédé selon l'une des revendications 1 et 2, **caractérisé en ce que** l'étape de remplissage des canaux (2c) et des passages (4c, 5c) par l'électrolyte solide (6) est réalisée par imprégnation de l'élément séparateur (2) muni des collecteurs de courant anodique (5) et cathodique (4) par un matériau précurseur de l'électrolyte solide (6) et par réticulation du matériau précurseur de manière à obtenir l'électrolyte solide (6).

4. Procédé selon l'une des revendications 1 et 2, **caractérisé en ce que** l'étape de remplissage des canaux (2c) et des passages (4c, 5c) par l'électrolyte solide (6) est réalisée par immersion de l'élément séparateur (2) muni des collecteurs de courant anodique (5) et cathodique (4) dans une solution contenant au moins un solvant et l'électrolyte et par évaporation du solvant.

5. Procédé selon l'une quelconque des revendications 1 à 4, **caractérisé en ce que** l'étape de remplissage des canaux (2c) et de passages (4c, 5c) comporte une étape de planarisation permettant de dégager les secondes surfaces des collecteurs de courant.

6. Procédé selon l'une quelconque des revendications 1 à 5, **caractérisé en ce que** l'étape de remplissage des canaux (2c) et de passages (4c, 5c) est suivie par l'assemblage d'une anode (8) et d'une cathode (7) sur la seconde surface (4b, 5b) du collecteur de courant (4, 5) correspondant.

7. Procédé selon l'une quelconque des revendications 1 à 6, **caractérisé en ce que** le matériau polymère thermoplastique de l'élément séparateur est constitué par une résine fluorocarbonée.

8. Procédé selon la revendication 7, **caractérisé en ce que** la résine fluorocarbonée est choisie parmi un copolymère modifié d'éthylène et de tétrafluoroéthylène, le polyfluorure de vinylidène, un copolymère de polyfluorure de vinylidène et d'héxafluorure de propylène.

9. Procédé selon l'une quelconque des revendications 1 à 8, **caractérisé en ce que** les particules dures (3) sont choisies parmi les particules céramiques, en verre, en polymère.

10. Procédé selon l'une quelconque des revendications 1 à 9, **caractérisé en ce que** chaque collecteur de courant (4, 5) comporte une pluralité de passages transversaux (4c, 5c) le traversant d'une première surface (4a, 5a) à une seconde surface (4b, 5b).

11. Procédé selon l'une quelconque des revendications 1 à 10, **caractérisé en ce que** chaque collecteur de courant (4, 5) comporte, sur sa seconde surface (4b, 5b), une zone latérale (4d, 5d) non recouverte destinée à servir de connexion électrique.

12. Procédé selon l'une quelconque des revendications 1 à 11, **caractérisé en ce qu'**au moins un collecteur de courant (4, 5) est sous forme d'une grille, d'un peigne, d'une couche mince en matériau tissé ou en matériau poreux.

13. Procédé selon l'une quelconque des revendications 1 à 12, **caractérisé en ce que** l'élément séparateur (2) est sous forme d'un film perforé, d'une grille, d'une couche mince en matériau tissé ou en matériau poreux.

## Claims

1. Process for manufacturing a fuel cell **characterized in that** it successively comprises the following steps:
- insertion of spacers formed by electrically insulating hard particles (3) in transverse channels of an electrically insulating separator element (2) formed by a thermoplastic polymer material, the said transverse channels passing through the separator element from a first face (2a) of the said separator element (2) to a second face (2b) of the said separator element (2),
- assembly by pressing of two current collectors, respectively anodic current collector (5) and cathodic current collector (4) and each comprising at least one transverse passage (4c, 5c) passing through the said corresponding current collector, from a first surface (4a, 5a) to a second surface (4b, 5b), by application of the first surfaces (4a) of the two current collectors respectively on the first and second faces (2a, 2b) of the separator (4, 5) in the separator element (2),
- and filling of the channels (2c) and passages (4c, 5d) by an ionically conducting solid electrolyte (6), so as the solid electrolyte (6) occupies the volume bounded by the channels (2c) of the separator element (2) and by the passages (4c, 5c) of the current collectors (4, 5) and is in contact with the two current collectors (4, 5).

2. Process according to claim 1, **characterized in that** the assembly step of the current collectors (4, 5) on the first and second faces (2a, 2b) of the separator element (2) is performed by hot lamination.

3. Process according to one of claims 1 and 2, **characterized in that** the filling step of the channels (2c) and passages (4c, 5c) by the solid electrolyte (6) is performed by impregnation of the separator element (2) equipped with the anodic (5) and cathodic (4) current collectors by a precursor material of the solid electrolyte (6) and by cross-linking of the precursor material so as to obtain the solid electrolyte (6).

4. Process according to one of claims 1 and 2, **characterized in that** the filling step of the channels (2c) and passages (4c, 5c) by the solid electrolyte (6) is performed by immersion of the separator element (2) equipped with the anodic (5) and cathodic (4) current collectors in a solution containing at least a solvent and the electrolyte and by evaporation of the solvent.

5. Process according to any one of claims 1 to 4, **characterized in that** the filling step of the channels (2c) and passages (4c, 5c) comprises a planarization step to clear the second surfaces of the current collectors.

6. Process according to any one of claims 1 to 5, **characterized in that** the filling step of the channels (2c) and passages (4c, 5c) is followed by assembly of an anode (8) and a cathode (7) on the second surface (4b, 5b) of the corresponding current collector (4, 5).

7. Process according to any one of claims 1 to 6, **characterized in that** the thermoplastic polymer material of the separator element is formed by a fluorocarbon resin.

8. Process according to claim 7, **characterized in that** the fluorocarbon resin is chosen from a modified ethylene and tetrafluoroethylene copolymer, polyvinylidene fluoride, a polyvinylidene fluoride and propylene hexafluoride copolymer.

9. Process according to any one of claims 1 to 8, **characterized in that** the hard particles (3) are chosen from ceramic, glass and polymer particles.

10. Process according to any one of claims 1 to 9, **characterized in that** each current collector (4, 5) comprises a plurality of transverse passages (4c, 5c) passing through it from a first surface (4a, 5a) to a second surface (4b, 5b).

11. Process according to any one of claims 1 to 10, **characterized in that** each current collector (4, 5) comprises a non-covered lateral zone (4d, 5d), on its second surface (4b, 5b), designed to act as electric connection.

12. Process according to any one of claims 1 to 11, **characterized in that** at least a current collector (4, 5) is in the form of a grid, a comb, or a thin layer of woven material or of porous material.

13. Process according to any one of claims 1 to 12, **characterized in that** the separator element (2) is in the form of a perforated film, a grid, or a thin layer of woven material or of porous material.

## Patentansprüche

1. Verfahren zur Herstellung einer Brennstoffzelle,
**dadurch gekennzeichnet,**
**dass** es hintereinander folgende Verfahrensschritte umfasst:
- Einführen von Zwischenkeilen, die von harten Partikeln (3) gebildet werden und elektrisch isolierend sind, in Querkanäle eines elektrisch isolierenden Separatorelements (2), das aus einem thermoplastischen Polymerwerkstoff gebildet ist, wobei diese Querkanäle das Separatorelement durchqueren, und zwar von einer ersten Seite (2a) dieses Separatorelements zu einer zweiten, entgegengesetzt liegenden Seite (2b) dieses Separatorelements,
- Zusammenfügen durch Pressen von zwei Stromkollektoren, einem anodischen (5) und einem kathodischen (4), die jeweils mindestens einen quer verlaufenden Durchgang (4c, 5c) aufweisen, welcher den jeweiligen Stromkollektor von einer ersten Oberfläche (4a, 5a) zu einer zweiten Oberfläche (4b, 5b) hin durchquert, wobei die ersten Oberflächen (4a) der beiden Stromkollektoren auf die erste bzw. die zweite Seite (2a bzw. 2b) des Separatorelements (2) gedrückt werden und das Separatorelement (2) während des Pressens verformt wird, so dass die Stromkollektoren (4, 5) in diesem Separatorelement (2) inkrustiert und befestigt werden, und
- Befüllen der Kanäle (2c) und der Durchgänge (4c, 5c) mit einem Ionen leitenden, festen Elektrolyt (6), damit dieser feste Elektrolyt (6) den von den Kanälen (2c) des Separatorelements (2) und von den Durchgängen (4c, 5c) der Stromkollektoren (4, 5) abgegrenzten Raum einnimmt und sich in Kontakt mit den beiden Stromkollektoren (4, 5) befindet.

2. Verfahren nach Anspruch 1,
**dadurch gekennzeichnet,**
**dass** der Verfahrensschritt des Zusammenfügens der Stromkollektoren (4, 5) an der ersten und der zweiten Seite (2a, 2b) des Separatorelements (2) durch Warmwalzen durchgeführt wird.

3. Verfahren nach einem der Ansprüche 1 und 2,
**dadurch gekennzeichnet,**
**dass** der Verfahrensschritt des Befüllens der Kanäle (2c) und der Durchgänge (4c, 5c) mit dem festen Elektrolyt (6) durch Imprägnieren des mit dem anodischen Stromkollektor (5) und dem kathodischen Stromkollektor (4) versehenen Separatorelements (2) mit einem Ausgangsstoff des festen Elektrolyts (6) und durch Vernetzung des Ausgangsstoffs dergestalt, dass der feste Elektrolyt (6) hergestellt wird, erfolgt.

4. Verfahren nach einem der Ansprüche 1 und 2,
**dadurch gekennzeichnet,**
**dass** der Verfahrensschritt des Befüllens der Kanäle (2c) und der Durchgänge (4c, 5c) mit dem festen Elektrolyt (6) durch Tauchen des mit dem anodischen Stromkollektor (5) und dem kathodischen Stromkollektor (4) versehenen Separatorelements (2) in einer Lösung erfolgt, die mindestens ein Lösungsmittel und den Elektrolyt enthält, und durch Verdampfen des Lösungsmittels.

5. Verfahren nach einem der Ansprüche 1 bis 4,
**dadurch gekennzeichnet,**
**dass** der Verfahrensschritt des Befüllens der Kanäle (2c) und der Durchgänge (4c, 5c) einen Schritt des Glättens beinhaltet, der es ermöglicht, die zweiten Oberflächen der Stromkollektoren abzulösen.

6. Verfahren nach einem der Ansprüche 1 bis 5,
**dadurch gekennzeichnet,**
**dass** auf den Verfahrensschritt des Befüllens der Kanäle (2c) der Durchgänge (4c, 5c) das Anfügen einer Anode (8) und einer Kathode (7) an der zweiten Oberfläche (4b, 5b) des entsprechenden Stromkollektors folgt.

7. Verfahren nach einem der Ansprüche 1 bis 6,
**dadurch gekennzeichnet,**
**dass** der thermoplastische Polymerwerkstoff des Separatorelements aus einem Fluorkohlenstoffharz gebildet ist.

8. Verfahren nach Anspruch 7,
**dadurch gekennzeichnet,**
**dass** das Fluorkohlenstoffharz aus einem modifizierten Ethylen- und Tetrafluorethylen-Copolymer, Vinyliden-Polyfluorid, einem Vinyliden-Polyfluorid-Copolymer und Propylenhexafluorid gewählt wird.

9. Verfahren nach einem der Ansprüche 1 bis 8,
**dadurch gekennzeichnet,**
**dass** die harten Partikel (3) unter den Keramik-, Glas-, Polymerpartikeln gewählt werden.

10. Verfahren nach einem der Ansprüche 1 bis 9,
**dadurch gekennzeichnet,**
**dass** jeder Stromkollektor (4, 5) eine Mehrzahl von quer verlaufenden Durchgängen (4c, 5c) aufweist, die ihn von einer ersten Oberfläche (4a, 5a) zu einer zweiten Oberfläche (4b, 5b) hin durchqueren.

11. Verfahren nach einem der Ansprüche 1 bis 10,
**dadurch gekennzeichnet,**
**dass** jeder Stromkollektor (4, 5) an seiner zweiten Oberfläche (4b, 5b) einen unbedeckte seitliche Zone (4d, 5d) aufweist, die dazu vorgesehen ist, als elektrischer Anschluss zu dienen.

12. Verfahren nach einem der Ansprüche 1 bis 11,
**dadurch gekennzeichnet,**
**dass** mindestens ein Stromkollektor (4, 5) in der Form eines Gitters, eines Kamms, einer dünnen Schicht aus Gewebestoff oder aus porösem Werkstoff ausgebildet ist.

13. Verfahren nach einem der Ansprüche 1 bis 12,
**dadurch gekennzeichnet,**
**dass** das Separatorelement (2) in der Form eines perforierten Films, eines Gitters, einer dünnen Schicht aus Gewebestoff oder aus porösem Werkstoff ausgebildet ist.
